# EUROPEAN PATENT APPLICATION

(11) **EP 1 787 510 A1**
(43) Date of publication of application: **23.05.2007**
(21) Application number: 06077005.4
(22) Date of filing: 10.11.2006
(51) Int. Cl.: A01K 5/02, H02P 5/74

(54) **A feeding installation**

(30) Priority: 22.11.2005 NL 1030489
(71) Applicant: MAASLAND N.V., 3147 PA Maassluis (NL)
(72) Inventor: van den Berg, Karel, 2971 BR Bleskensgraaf (NL)

(57) **Abstract**

A feeding installation (1) comprising a trough (2) for offering feed to an animal, several storage containers (3, 4), each provided with a metering device (15A, 15B, 15C) for metering an amount of feed, a converter (7) for generating an alternating current for controlling the metering device (15A, 15B, 15C), and a control device (8) for controlling the converter (7). Several metering devices (15A, 15B, 15C) are capable of being energized individually by the converter (7).

## Description

The invention relates to a feeding installation according to the preamble of claim 1.

Such an installation is known from German patent application DE-19756367-A1. This document discloses a metering device comprising several storage containers from which feed is capable of being metered in a mixing space. From this mixing space transport takes place to the feed troughs. Metering feed from the storage containers takes place by making the metering device meter at a particular number of revolutions per minute. A frequency generator per metering device generates for this purpose a three-phase current with a particular frequency.

A problem with such an installation is that, in particular in the case of several metering devices, complex electric circuits are needed.

The invention aims at providing an installation of the above-mentioned type in which the metering devices are controlled in a simple manner.

This is achieved by means of a feeding installation of the above-mentioned type characterized in that several metering devices are capable of being energized individually by the converter. A converter is a relatively complex electric device. Owing to the fact that several metering devices can be operated by the same converter, less circuits are needed.

The converter is preferably a frequency converter. For the drive of metering devices it is possible to make use of standard three-phase motors. The number of revolutions per minute of these motors is adjustable by regulating the frequency of the alternating current applied.

In a particular embodiment according to the invention, each metering device is capable of being energized by the converter via a switch, the switch being operable by the control device. In this manner it is possible to operate the switch in such a way that it switches without being energized, which means: that the switch switches while no voltage is being applied to it. This prevents wear of the switch.

The feeding installation comprises in particular a mixing space, the metering device being suitable for adding feed from a storage container to the mixing space. In this manner it is possible to prepare an amount of feed composed of several sorts of feed in any desired proportion.

In a particular embodiment, the feeding installation comprises several troughs orientated around a central axis, the storage containers being located above the troughs. This provides a compact construction occupying little space in a stable.

The metering device preferably comprises an auger with an electric motor. Such a metering device is simple and robust.

In a further favourable embodiment, the metering device comprises monitoring sensors that are suitable for supplying a monitoring signal and the control device is controllable by the monitoring signal. This makes it possible to monitor automatically the metering device, so that action can be taken before the occurrence of damage to the device. These actions preferably take place automatically by means of the control device.

It is advantageous if the converter comprises the monitoring sensor. This renders separate sensors disposed on the motor of the metering device superfluous.

In a particular embodiment, the feeding installation is suitable for controlling the metering device in a direction opposite to the metering direction. This makes it possible that, in case of a blockage, the metering device operates in opposite direction, so that the blockage is obviated. This preferably takes place automatically after detection of a blockage.

In a further embodiment of the invention, the control device comprises a memory for storing metering device parameters and the metering device is controllable on the basis of the metering device parameters. Because the metering devices can differ from each other and/or meter different feed, for an optimum metering each metering device has to be controlled in a different manner.

In a still further embodiment of the invention, the feeding installation comprises a metering device suitable for metering feed directly from the storage container into the trough.

The invention will be explained hereinafter in further detail with reference to an embodiment shown in the drawing, in which:
Figure 1 shows diagrammatically the electric control of the feeding installation, and
Figure 2 is a cross-sectional view of a feeding installation according to the invention.

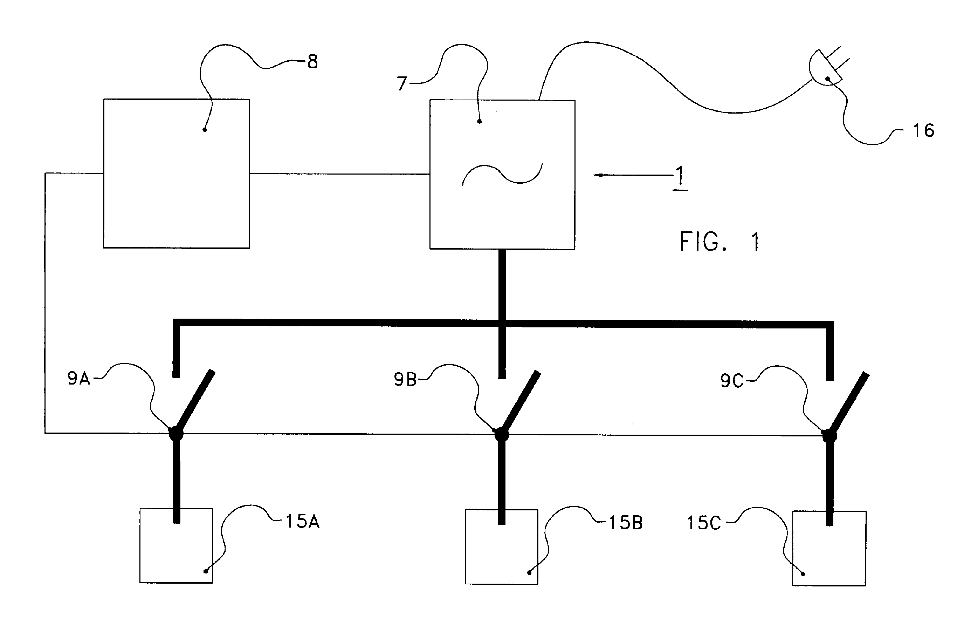

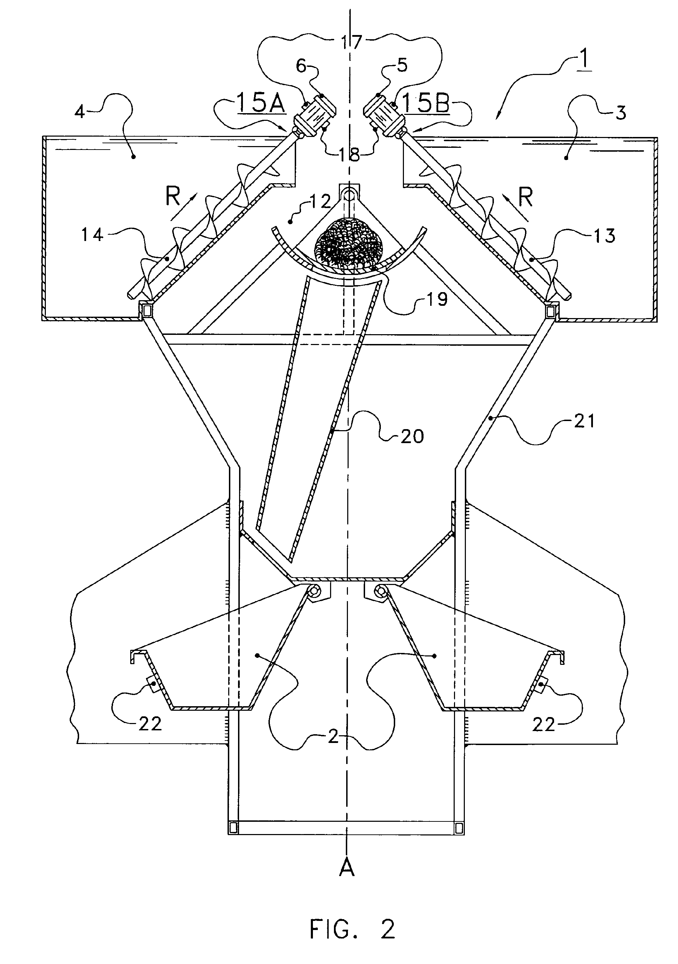

Figure 1 shows diagrammatically a feeding installation 1 according to the invention, comprising a trough 2 (Figure 2) for offering feed to an animal, several storage containers 3, 4 (Figure 2), each provided with a metering device 15A, 15B, 15C for metering an amount of feed, a converter 7 for generating an alternating current for controlling the metering device 15A, 15B, 15C, and a control device 8 for controlling the converter 7, several metering devices 15A, 15B, 15C being capable of being energized individually by the converter 7. Each metering device 15A, 15B, 15C is capable of being energized by the converter 7 via a switch 9A, 9B, 9C, the switch 9A, 9B, 9C being operable by the control device 8. The converter converts a signal into a current by means of which a motor is capable of being energized. The converter 7 shown is designed as a frequency converter, the number of revolutions per minute of the motor 5, 6 of the metering device 15A, 15B, 15C being adjustable in dependence on the frequency of the alternating current by means of which the motor 5, 6 is energized. Other converters 7, controlling a motor 5, 6 on the basis of for example a voltage or a block current, are possible as well.

The feeding installation 1 is connectable to a two-phase current source via a plug 16. The frequency converter 7 known per se converts this two-phase alternating current into a three-phase alternating current by means of which the motors 5, 6 (Figure 2) of the metering devices 15A, 15B, 15C are capable of being energized. The wires for the three-phase current are indicated in bold. By controlling the phase difference of the three phases of the outgoing alternating current in such a way, alternating voltages with different net frequencies are possible, so that the motor 5, 6 can be driven at the number of revolutions per minute corresponding to the frequency.

Figure 2 is a cross-section of a feeding installation 1 according to the invention in the form of a feeding column. The feeding installation 1 comprises several troughs 2 orientated around a central axis A, the storage containers 3, 4 being located above the troughs 2. The feeding installation 1 further comprises a mixing space 12, the metering device 15A, 15B, 15C being suitable for adding feed from a storage container 3, 4 to the mixing space 12. Each metering device 15A, 15B, 15C comprises an auger 13, 14 with an electric motor 5, 6. Here the auger 13, 14 is disposed directly on the axis of the electric motor 5, 6. The entire feeding column is built up around a frame 21.

The bottom of the mixing space 12 is in the form of a flap 19. At the lower side of the mixing space 12 there is disposed a pipe-shaped chute 20 that is rotatable about the central axis A. By rotation about said axis the pipe-shaped chute 20 can lead the feed into a selected trough 2.

The feeding installation 1 comprises monitoring sensors 17, 18 that are suitable for supplying a monitoring signal, the control device 8 being controllable by the monitoring signal. A monitoring sensor 17, 18 is designed as a temperature sensor. A second monitoring sensor 17, 18 in the form of a torque sensor is disposed on the motor 5, 6 for measuring the drive torque of the motor 5, 6. The converter 7 can also comprise the monitoring sensor 17, 18. The signals the converter 7 receives for regulating the frequency are compared with standard values. A too great deviation can be an indication of a malfunction.

The feeding installation 1 is suitable for controlling the metering device 15A, 15B, 15C in a direction opposite to the metering direction R. This makes it possible that, if the monitoring sensors 17, 18 detect a blockage, the control device 8 controls the converter 7 in such a way that the outgoing three-phase alternating voltage effects that the direction of rotation of the auger 13, 14 is reversed. As a result of this, the blockage will be rotated back into the storage container 3, 4. After an adjustable number of revolutions in opposite direction, it will be possible again to control the auger 13, 14 in the normal metering direction R. It is also possible to use the reversing device in an alternating manner for the purpose of mixing the feed in the storage container 3, 4.

The control device 8 comprises a memory for storing metering device parameters, the metering device 15A, 15B, 15C being controllable on the basis of the metering device parameters. Metering device parameters are, for example, starting torque, starting speed, metering speed or maximum load. This makes it possible to control the motor 5, 6 of the metering device 15A, 15B, 15C using the optimum parameters. For example, the controlling speed of the metering device 15A, 15B, 15C will depend on the type of feed in the storage container 3, 4. Sticky and viscous feed will then be metered at a lower metering speed.

In a non-shown embodiment of the feeding installation 1, the feeding installation 1 comprises a metering device 15A, 15B, 15C suitable for metering feed directly from the storage container 3, 4 into the trough 2. Said metering device 15A, 15B, 15C and said storage container 3, 4 are particularly suitable for roughage, such as chopped maize and potatoes. Handling roughage requires stronger drives and larger passages. Besides, said storage container comprises an agitator for preventing blockages, which agitator is drivable simultaneously with the auger of the metering device 15A, 15B, 15C. There is disposed a second metering device 15A, 15B, 15C for metering concentrate from a concentrate silo into a mixing space 12. Said mixing space 12 serves as an intermediate storage space and comprises its own metering device 15A, 15B, 15C for metering concentrate into the trough 2. The electric motors 5, 6 of said three metering devices 15A, 15B, 15C are capable of being energized by the converter 7.

The mode of operation of the feeding installation 1 is as follows an animal reports at the feeding installation 1 and is recognized in a known manner by the animal identification device 22. The control device 8 retrieves the data of the animal from the memory and determines on the basis thereof the sort and the amount of feed for the animal. Subsequently, the amount of a particular ingredient is converted into the number of revolutions of the auger 13, 14 of the respective storage container 3, 4, for example storage container 3. Switch 9B is closed so that the frequency converter 7 will be connected with the relevant motor 5 of the metering device 15B. Subsequently, the frequency converter 7 is controlled in such a way that the motor 5 will make the desired number of revolutions at the desired speed. The ingredient transported by the auger 13 is metered in the mixing space 12. The frequency converter 7 is put out of operation, the switch 9B is opened, and subsequently the process starts again for the ingredient in storage container 4. The pipe-shaped chute 20 is moved into the position of the trough 2, after which the portion in the mixing space 12 consisting of the ingredients from storage containers 3 and 4 is dropped into the pipe-shaped chute 20 by opening the flap 19. The flap 19 is closed again, after which a next portion of mixed feed is prepared, if desired.

By contamination and/or blockage the temperature in a motor 5, 6 can rise to a too high level. This is detected by a temperature sensor 17 near the motor 5, 6 and the value is passed on to the control device 8. When a particular temperature is exceeded, the motor 5, 6 is put out of operation. This also happens when a particular measured torque is exceeded. The torque sensor 18 can also be used to detect whether there is still feed in a storage container.

The invention is not limited to the described embodiment of a feeding column with a mixing space 12, but can also be applied, for example, in a milking robot that is suitable for supplying several sorts of feed.

Furthermore, the invention is not limited to a metering device 15A, 15B, 15C operating via an auger 13, 14, but may comprise various embodiments, such as a conveyor belt, a metering disc or a metering pump. In the latter case, the device is suitable for supplying liquid and viscous substances, such as molasses.

Instead of each metering device 15A, 15B, 15C being energized individually, it is also possible for several metering devices 15A, 15B, 15C to be energized simultaneously by the converter 7 by means of the same signal. In this manner it is possible to meter simultaneously from several storage containers 3, 4.

## Claims

1. A feeding installation (1) comprising a trough (2) for offering feed to an animal, several storage containers (3, 4) each provided with a metering device (15A, 15B, 15C) for metering an amount of feed, a converter (7) for generating an alternating current for controlling the metering device (15A, 15B, 15C), and a control device (8) for controlling the converter (7), **characterized in that** several metering devices (15A, 15B, 15C) are capable of being energized individually by the converter (7).

2. A feeding installation (1) as claimed in claim 1, **characterized in that** the converter (7) is a frequency converter.

3. A feeding installation (1) as claimed in claim 1 or 2, **characterized in that** each metering device (15A, 15B, 15C) is capable of being energized by the converter (7) via a switch (9A, 9B, 9C), the switch (9A, 9B, 9C) being capable of being operated by the control device (8).

4. A feeding installation (1) as claimed in any one of the preceding claims, **characterized in that** the feeding installation (1) comprises a mixing space (12), the metering device (15A, 15B, 15C) being suitable for adding feed from a storage container (3, 4) to the mixing space (12).

5. A feeding installation (1) as claimed in any one of the preceding claims, **characterized in that** the feeding installation (1) comprises several troughs (2) orientated around a central axis (A), the storage containers (3, 4) being located above the troughs (2).

6. A feeding installation (1) as claimed in any one of the preceding claims, **characterized in that** the metering device comprises an auger (13, 14) with an electric motor (5, 6).

7. A feeding installation (1) as claimed in any one of the preceding claims, **characterized in that** the metering device (15A, 15B, 15C) comprises a monitoring sensor (17, 18) that is suitable for supplying a monitoring signal, and **in that** the control device (8) is controllable by the monitoring signal.

8. A feeding installation (1) as claimed in claim 7, **characterized in that** the converter (7) comprises the monitoring sensor (17, 18).

9. A feeding installation (1) as claimed in any one of the preceding claims, **characterized in that** the feeding installation (1) is suitable for controlling the metering device (15A, 15B, 15C) in a direction opposite to the metering direction (R).

10. A feeding installation (1) as claimed in any one of the preceding claims, **characterized in that** the control device (8) comprises a memory for storing metering device parameters, and **in that** the metering device (15A, 15B, 15C) is controllable on the basis of the metering device parameters.

11. A feeding installation (1) as claimed in any one of the preceding claims, **characterized in that** the feeding installation (1) comprises a metering device (15A, 15B, 15C) suitable for metering feed directly from the storage container (3, 4) into the trough (2).
